# EUROPEAN PATENT APPLICATION

(11) **EP 4 763 654 A1**
(43) Date of publication of application: **24.06.2026**
(21) Application number: 25224115.3
(22) Date of filing: 16.12.2025
(51) Int. Cl.: B60W 60/00

(54) **GENERATING CANDIDATE PLANNED TRAJECTORIES AND PREDICTED FUTURE TRAJECTORIES USING A SHARED PREDICTION NEURAL NETWORK**

(30) Priority: 17.12.2024 US 202463735270 P
(71) Applicant: Waymo LLC, Mountain View, CA 94043 (US)
(72) Inventor: CHARROW, Benjamin, Mountain View, CA 94043 (US); BHASKAR, Anand, Mountain View, CA 94043 (US)
(74) Representative: Derry, Paul Stefan

(57) **Abstract**

Methods, systems, and apparatus, including computer programs encoded on a computer storage medium, for planning the future trajectory of an autonomous vehicle in an environment.

## Description

### CROSS-REFERENCE TO RELATED APPLICATION

This application claims priority to U.S. Provisional Application No. 63/735,270, filed on December 17, 2024.

### BACKGROUND

This specification relates to planning the future trajectory of an autonomous vehicle in an environment.

The environment may be a real-world environment, and the autonomous vehicle can be, e.g., an automobile in the environment.

Autonomous vehicles include fully autonomous driverless cars, boats, and aircraft. Autonomous vehicles use a variety of on-board sensors and computer systems to detect nearby objects and use such detections to make control and navigation decisions.

### SUMMARY

This specification describes how an autonomous vehicle, e.g., an automobile, can use a trained machine learning model to plan a trajectory for the autonomous vehicle from perception signals, i.e., from outputs generated by a perception system on-board the autonomous vehicle. More specifically, this specification describes generating both candidate planned trajectory outputs for the autonomous vehicle and predicted future trajectory outputs for other agents using the same shared prediction neural network.

In general, one innovative aspect of the subject matter described in this specification can be embodied in methods that include the actions of: obtaining, by an autonomous vehicle, scene data characterizing a scene in an environment at a current time point that comprises the autonomous vehicle and a set of target agents; receiving, by the autonomous vehicle, route data characterizing an intended route through the environment for the autonomous vehicle after the current time point; and processing, by the autonomous vehicle, the route data and the scene data using a prediction neural network to generate a prediction output that comprises (i) a set of one or more candidate planned trajectory outputs for the autonomous vehicle that each specify a respective planned trajectory for the autonomous vehicle starting from the current time point and (ii) for each target agent in the set of target agents, a respective set of one or more predicted future trajectory outputs that each specify a respective predicted future trajectory for the target agent starting from the current time point.

The foregoing and other embodiments can each optionally include one or more of the following features, alone or in combination. In particular, one embodiment includes all the following features in combination.

In some implementations, the method further includes controlling the autonomous vehicle using the prediction output.

In some implementations, the scene at the current time point comprises a plurality of other agents, and wherein the set of target agents is a subset of the plurality of other agents.

In some implementations, the subset is a proper subset.

In some implementations, each candidate planned trajectory output comprises, for each of a plurality of future time steps, data defining a respective planned future state for the autonomous vehicle at the future time step.

In some implementations, each candidate planned trajectory output further comprises a likelihood score that represents an estimated likelihood that the respective candidate planned trajectory will be a most optimal trajectory for the autonomous vehicle given the intended route for the autonomous vehicle.

In some implementations, for each target agent, each predicted future trajectory output comprises, for each of a plurality of future time steps, data defining a respective predicted future state for the target agent at the future time step.

In some implementations, each predicted future trajectory output further comprises a likelihood score that represents a predicted likelihood that the respective predicted future trajectory will be an actual trajectory traversed by the target agent.

In some implementations, the prediction neural network comprises: an encoder neural network that processes the scene data to generate an encoded representation of the scene data; and a decoder neural network that processes the encoded representation of the scene data and the route data to generate the prediction output.

In some implementations, the respective sets of predicted trajectory outputs are conditioned on the encoded representation of the scene data and not conditioned on the route data, and the set of planned trajectory outputs are conditioned on the encoded representation of the scene data and on the route data.

In some implementations, the decoder neural network is configured to maintain a respective query corresponding to each candidate planned trajectory output and each predicted trajectory output, and wherein processing the encoded representation of the scene data and the route data to generate the prediction output comprises: for each candidate planned trajectory: updating the query corresponding to the candidate planner trajectory conditioned on the queries corresponding to any other candidate planned trajectories, the queries corresponding to the predicted trajectories, the encoded representation of scene data, and the intended route; and generating the candidate planned trajectory from the updated query.

In some implementations, processing the encoded representation of the scene data and the route data to generate the prediction output comprises: for each predicted future trajectory: updating the query corresponding to the predicted future trajectory conditioned on the queries corresponding to the predicted trajectories and the encoded representation of scene data but not on the intended route or on the queries corresponding to any other candidate planned trajectories; and generating the predicted future trajectory from the updated query.

In some implementations, the decoder neural network that processes the encoded representation of the scene data and the route data to generate the prediction output comprises a shared prediction head that generates each candidate planned trajectory output and each predicted future trajectory output.

In some implementations, each candidate planned trajectory output specifies, at each future time step in the respective planned trajectory, a respective turn signal state for the autonomous vehicle at the future time step given that the autonomous vehicle is following the respective planned trajectory.

In some implementations, each candidate planned trajectory output specifies, at each future time step in the respective planned trajectory, a respective gear state for the autonomous vehicle at the future time step given that the autonomous vehicle is following the respective planned trajectory.

In some implementations, the prediction output further comprises, for each of one or more traffic signals in the scene, a respective predicted state of the traffic signal at each of one or more future time points after the current time point.

Other embodiments of this aspect include corresponding computer systems, apparatus, and computer programs recorded on one or more computer storage devices, each configured to perform the actions of the methods. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example system.
FIG. 2 is a flow diagram of an example process for controlling an autonomous vehicle.
FIG. 3 is a diagram showing the architecture of the prediction neural network.
FIG. 4 is a flow diagram of an example process for generating candidate planned trajectory and predicted future trajectories.

Like reference numbers and designations in the various drawings indicate like elements.

### DETAILED DESCRIPTION

This specification describes how an autonomous vehicle, e.g., an automobile, can use a trained machine learning model to plan a trajectory for the autonomous vehicle from perception signals, i.e., from outputs generated by a perception system on-board the autonomous vehicle.

Autonomous vehicles generally perform both behavior prediction, i.e., predicting the behavior of other agents in the vicinity of the autonomous vehicle, and trajectory planning, i.e., planning the trajectory of the autonomous vehicle in order to effectively navigate the autonomous vehicle in a driving environment. These tasks are interrelated, in that the future behavior of other agents will influence the optimal future trajectory for the autonomous vehicle and the future behavior of the autonomous vehicle will influence the future behavior of the other agents. For example, the optimal future trajectory for the autonomous vehicle may include a deceleration if another agent merges into the driving line of the autonomous vehicle ahead of the autonomous vehicle.

However, existing systems generally perform these tasks using separate machine learning models. That is, an autonomous driving system may use one neural network to perform behavior prediction and another neural network to perform trajectory planning. For example, this may be done due to the difficulty in training one neural network to perform both tasks simultaneously. As a particular example, this may be done due to the fact that trajectory planning is conditioned on privileged information that is not known to the other agents, e.g., the intended route of the autonomous vehicle, while behavior prediction needs to be performed independently of this privileged information in order to accurately model the future behavior of other agents, i.e., because other agents are actually not aware of the intended route of the autonomous vehicle in the future. However, performing these tasks separately results in suboptimal trajectory planning results and introduces additional latency and computational overhead into the prediction process, i.e., because the trajectory planning outputs cannot consider information from the behavior prediction outputs and because maintaining and performing inference using two separate neural networks is required.

The techniques described in this specification address these issues by using a shared prediction neural network that generates both candidate planned trajectories and predicted future trajectories in parallel from the data characterizing the scene. This reduces latency, because only one neural network is required to perform both tasks, and improves the quality of the candidate planned trajectories, because the candidate planned trajectories effectively incorporate context from the predicted future trajectories. Moreover, the described techniques can perform this parallel prediction while maintaining the accuracy of the predicted future trajectories by avoiding conditioning the predicted future trajectories on privileged information. Instead, the described techniques implement a dependency scheme that allows the prediction neural network to operate so that (i) the respective sets of predicted trajectory outputs are conditioned on the current scene in the environment and not conditioned on the intended route of the autonomous vehicle while (ii) the set of planned trajectory outputs are conditioned on the current scene and the intended route. Thus, the resulting planned trajectory outputs and the resulting predicted trajectory outputs can be generated with reduced computational overhead and with improved accuracy, resulting in improved control of the autonomous vehicle.

Moreover, in some cases, the described techniques allow the shared prediction neural network to generate one or more additional outputs for each candidate planned trajectory. Generating these additional outputs can provide a richer training signal for training the prediction neural network, can provide additional information that can allow a control system to more effectively use the predictions generated by the prediction neural network to control the autonomous vehicle, or both.

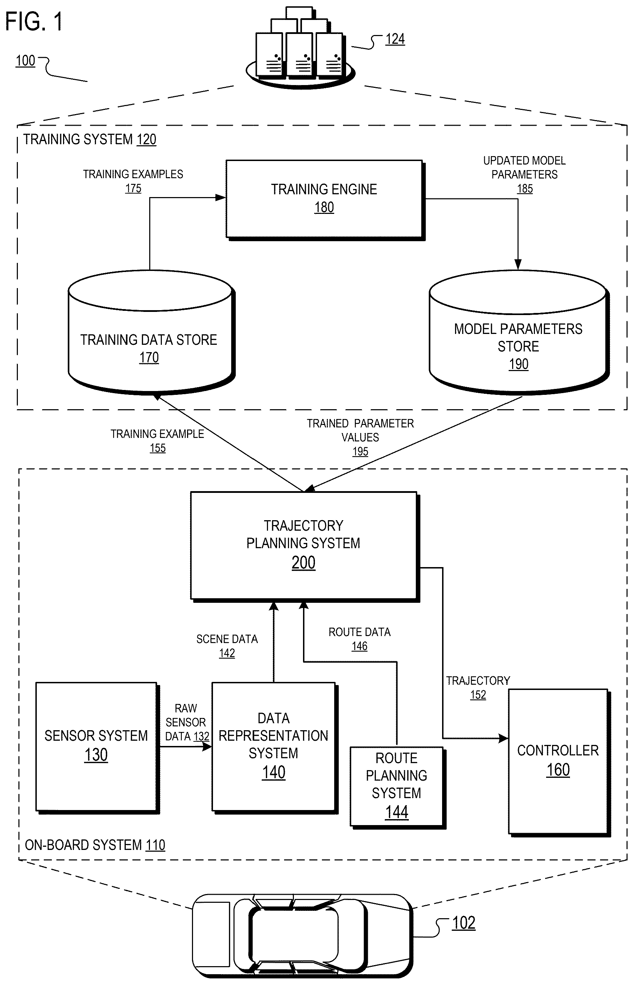

FIG. 1 shows an example system 100. The system 100 is an example of a system implemented as computer programs on one or more computers in one or more locations in which the systems, components, and techniques described below are implemented. The system 100 includes an on-board system 110 and a training system 120.

The on-board system 120 is physically located on-board a vehicle 102. Being on-board the vehicle 102 means that the on-board system 110 includes components that travel along with the vehicle 102, e.g., power supplies, computing hardware, and sensors. In some cases, the vehicle 102 is an autonomous vehicle. An autonomous vehicle can be a fully autonomous vehicle that determines and executes fully-autonomous driving decisions in order to navigate through an environment. An autonomous vehicle can also be a semi-autonomous vehicle that uses predictions to aid a human driver. For example, the vehicle 102 can autonomously apply the brakes if a prediction indicates that a human driver is about to collide with another vehicle. As another example, the vehicle 102 can have an advanced driver assistance system (ADAS) that assists a human driver of the vehicle 102 in driving the vehicle 102 by detecting potentially unsafe situations and alerting the human driver or otherwise responding to the unsafe situation. As a particular example, the vehicle 102 can alert the driver of the vehicle 102 or take an autonomous driving action when an obstacle is detected, when the vehicle departs from a driving lane, or when an object is detected in a blind spot of the human driver.

The on-board system 110 includes one or more sensor systems 130. The sensor systems 130 include a combination of components that receive reflections of electromagnetic radiation, e.g., lidar systems that detect reflections of laser light, radar systems that detect reflections of radio waves, and camera systems that detect reflections of visible light.

The sensor data generated by a given sensor generally indicates a distance, a direction, and an intensity of reflected radiation. For example, a sensor can transmit one or more pulses of electromagnetic radiation in a particular direction and can measure the intensity of any reflections as well as the time that the reflection was received. A distance can be computed by determining how long it took between a pulse and its corresponding reflection. The sensor can continually sweep a particular space in angle, azimuth, or both. Sweeping in azimuth, for example, can allow a sensor to detect multiple objects along the same line of sight.

The sensor systems 130 or other components of the vehicle 102 can also classify groups of one or more raw sensor measurements from one or more sensors as being measures of another agent. A group of sensor measurements can be represented in any of a variety of ways, depending on the kinds of sensor measurements that are being captured. For example, each group of raw laser sensor measurements can be represented as a three-dimensional point cloud, with each point having an intensity and a position in a particular two-dimensional or three-dimensional coordinate space. In some implementations, the position is represented as a range and elevation pair. Each group of camera sensor measurements can be represented as an image patch, e.g., an RGB image patch.

Once the sensor systems 130 classify one or more groups of raw sensor measurements as being measures of respective other agents, the sensor systems 130 can compile the raw sensor measurements into a set of raw data 132 and send the raw data 132 to a data representation system 140.

The data representation system 140, also on-board the vehicle 102, receives the raw sensor data 132 from the sensor system 130 and generates scene data 142. The scene data 142 characterizes the current state of the environment surrounding the vehicle 102 as of the current time point.

For example, the scene data can characterize, for one or more agents, e.g., other vehicles, pedestrians, cyclists, etc., in the environment, a current state at the current time point and a previous state at one or more respective previous time points. In other words, the scene data can include, for one or more agents in the environment, data that characterizes a previous trajectory of the agent in the environment up to the current time point. The state of an agent, e.g., a vehicle, a pedestrian, or a cyclist, at a time point can include the location of the agent at the time point and, optionally, values for a predetermined set of motion parameters at the time point. As a particular example, the motion parameters can include a heading for the agent, a velocity of the agent, and/or an acceleration of the agent. In another example, one or more agents in the environment can be represented jointly, e.g., by a state describing the position, dimensions, and velocity of the joint representation (e.g., the position, velocity, and horizontal dimensions of a crowd of pedestrians).

In some implementations, the scene data also includes data characterizing a current state of the autonomous vehicle at the current time point and a previous state of the autonomous vehicle at one or more respective previous time points.

In some implementations, the scene data also includes data characterizing features of the environment. These features can include (i) dynamic features of the environment, e.g., traffic light states at the current time point, (ii) static features of the environment, e.g., road graph data characterizing one or more of lane connectivity, lane type, stop lines, speed limits, and so on, of roadways in the vicinity of the autonomous vehicle or (iii) both. In one example, the dynamic features of the environment can be represented by a combination of polylines (e.g., for the position of the feature) and one-hot encoding vectors (e.g., one-hot encodings for the red-yellow-green lights of a traffic light, with polylines representing the position in the environment). The static features of the environment can be represented by polylines. For features represented by polylines, the features can be converted to feature vectors (e.g., represented by x, y points with vector directions in the environment, such as numerical values representing x, y positions and a heading) prior to the system using them.

The data representation system 140 provides the scene data 142 to a trajectory planning system 200, also on-board the vehicle 102.

Additionally, a route planning system 144 provides route data 146 to the trajectory planning system 200.

The route data 146 is an output generated by the route planning system 144 that characterizes how the autonomous vehicle should navigate in a future time window in order to follow a designated route.

For example, the route data 146 can reflect a determination by the planning system 144 that the autonomous vehicle should follow a route characterized by the route data 146 in order to satisfy certain criteria.

The route characterized by the route data 146 can be, e.g., a high level intended route for the autonomous agent embedded in the road graph for the environment with no notion of time.

The certain criteria can include one or more of, e.g., a set of one or more traffic laws (e.g., speed limit, right of way, lane traversal, etc.), a set of one or more safety regulations (e.g., minimum following distances, adjustments to speed given weather conditions, etc.), or a set of one or more goal criteria (e.g., an intended destination, minimum deviation from a template path when confronted with dynamic road conditions, etc.).

The route data 146 can be represented in any of a variety of ways.

For example, the route data 146 can be represented by, e.g., an ordered set of points with vector directions for the intended route (e.g., x, y positions with vector directions). Each point can represent a waypoint spatial location in a sequence of waypoint spatial locations for the autonomous vehicle to follow to reach an intended destination, e.g., a sequence of evenly-spaced waypoint spatial locations that are each constrained to fall on a feature that is present in the road graph, e.g., to fall on a path that is represented in the road graph, e.g., a path that traverses the center of any given driving lane.

As another example, the route data 146 can be represented as a natural language description of the route to be traversed.

As yet another example, the route data 146 can be represented as a sequence of one or more vectors, each of which identifies a driving maneuver (go straight, turn left, reverse, stop, and so on).

The trajectory planning system 200 processes the scene data 142 and the route data 146 to generate a final planned trajectory 152. The final planned trajectory 152 characterizes the future trajectory of the autonomous vehicle after the current time point.

The trajectory planning system 200 then provides the final planned trajectory 152 to a controller 160 of the autonomous vehicle 102.

The controller 160 is hardware or software or a combination of hardware and software on-board the autonomous vehicle 102 that controls the autonomous vehicle 102. That is, the controller 160 submits inputs to the various control systems of the autonomous vehicle 103, e.g., the braking system, the steering system, the throttle system, and so on, in order to control the movement of the autonomous vehicle 102 in the environment.

Thus, the controller 160 maps the final planned trajectory 152 to a sequence of controls for the control systems of the vehicle 102 and submits the controls to the control systems to control the vehicle 102.

For example, the controller 106 can submit the control inputs to the control systems at the corresponding time points until a new planned trajectory is received or until a signal is received from another component of the on-board system 110 that indicates that the controller 160 should stop controlling the vehicle 102 using the final trajectory 152.

To generate the final trajectory 152, the system 200 uses a prediction neural network.

The prediction neural network is a neural network that is configured to process the route data 146 and the scene data 142 to generate, as output, a set of one or more candidate planned trajectories for the vehicle 102. The prediction neural network also generates a respective set of predicted future trajectories for a set of target agents in the current scene.

The system 200 then generates the final trajectory 152 using the candidate planned trajectories generated by the prediction neural network and, optionally, the predicted future trajectories for the set of target agents.

For example, the system 200 can generate the final trajectory 152 by selecting one of the candidate planned trajectories and, optionally, post-processing the selected candidate planned trajectory. Generally, the system 200 can generate the final trajectory 152 by applying a set of rules, e.g., machine-learned rules, fixed rules, or a combination of both to the candidate planned trajectories. In some cases, one or more of the rules can be dependent on the predicted future trajectories. As one example, one or more of the rules can enforce minimum distances between the final trajectory 152 and the predicted future trajectories 164 for the set of target agents.

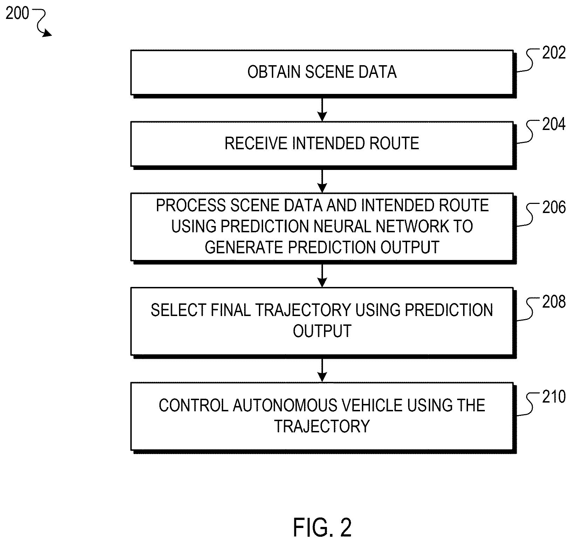

The prediction neural network and generating the final trajectory 152 are described in more detail below with reference to FIG. 2.

In some implementations, the on-board system 110 uses the control system 200 to control the vehicle throughout the operation of the vehicle 102 in the environment. In some other implementations, the on-board system 110 uses the control system 200 to control the vehicle only in certain driving scenarios and, in other driving scenarios, uses one or more other on-board systems to generate the inputs to the controller 160. As a particular example, the on-board system 110 can use the control system 200 for freeway or highway driving scenarios while using different control systems for navigating surface streets. As another particular example, the on-board system 110 can use the control system 200 for night-time driving scenarios while using different control systems for daytime driving scenarios.

To generate the trajectory 152, the trajectory planning system 200 can use trained parameter values 195, i.e., trained model parameter values of the prediction neural network, obtained from a trajectory planning model parameters store 190 in a training system 120.

The training system 120 can train the prediction neural network using any of a variety of imitation learning techniques, e.g., using a behavior cloning technique, an adversarial imitation learning technique, or a DAgger (data aggregation) imitation learning technique from driving logs generated by other autonomous vehicles or manually driven vehicles. As another example, the training system 120 can train the prediction neural network through reinforcement learning, e.g., by controlling one or more simulated vehicles in a simulation of the driving environment. As yet another example, the training system 120 can first train the prediction neural network through imitation learning and then fine-tune the prediction neural network through reinforcement learning.

The training system 120 is typically hosted within a data center 124, which can be a distributed computing system having hundreds or thousands of computers in one or more locations.

The training system 120 includes a training data store 170 that stores the training data used to train the trajectory planning system i.e., to determine the trained parameter values 195 of the trajectory planning system 200. The training data store 170 receives raw training examples from agents operating in the real world. For example, the training data store 170 can receive a raw training example 155 from an agent, e.g., a manually driven vehicle or autonomous vehicle controlled using a different planning system. The raw training example 155 can be processed by the training system 120 to generate a new training example. The raw training example 155 can include scene data and route data, e.g., like the scene data 142 and route data 146, that can be used as input for a new training example. The raw training example 155 can also include outcome data characterizing the state of the environment surrounding the autonomous vehicle 102 at the one or more future time points. This outcome data can be used to generate a ground truth trajectory for the autonomous vehicle at the time point characterized by the scene data and ground truth trajectories for the other, i.e., target, agents in the scene at the time point. The ground truth trajectory for a given agent, i.e., a target agent or the autonomous vehicle, identifies the actual trajectory (as derived from the outcome data) traversed by the agent at the future time points. For example, the ground truth trajectory can identify spatial locations in an autonomous vehicle-centric coordinate system to which the agent moved at each of multiple future time points. The outcome data can also be used to generate a respective ground truth output for each additional output that is generated by the prediction neural network, as will be described below.

The training data store 170 provides training examples 175 to a training engine 180, also hosted in the training system 120. The training engine 180 uses the training examples 175 to update model parameters that will be used by the trajectory planning system 200 and provides the updated model parameters 185 to the trajectory planning model parameters store 190. For example, the training engine 180 can train the prediction neural network on the training examples 175 using any appropriate imitation learning objective, e.g., one of the objectives described above. When the training example also includes the respective ground truth outputs for the additional output(s), the objective can also measure an error between the additional output(s) and the respective ground truth outputs, e.g., a mean squared error, a cross-entropy error, and so on.

Once the parameter values of the trajectory planning system 200 have been fully trained, the training system 120 can send the trained parameter values 195 to the trajectory planning system 200, e.g., through a wired or wireless connection.

FIG. 2 is a flow diagram of an example process 200 for controlling an autonomous vehicle. For convenience, the process 200 will be described as being performed by a system of one or more computers located in one or more locations. For example, a trajectory planning system, e.g., the trajectory planning system 200 of FIG. 1, appropriately programmed in accordance with this specification, can perform the process 200.

The system obtains scene data characterizing a scene in an environment that includes, at a current time point, an autonomous vehicle and one or more agents (step 202). For example, the system can obtain the scene data from sensor measurements of one or more sensors of the autonomous vehicle and, optionally, from other sources, e.g., from a road graph of the environment.

The system receives route data specifying an intended route for the autonomous vehicle after the current time point (step 204). As described above, the route data can include data characterizing an intended route for the autonomous vehicle after the current time point. For example, route data characterizing the intended route of the autonomous vehicle can be represented in any of a variety of ways, e.g., in natural language, as an ordered series of positions along a route, or a sequence of one or more vectors each characterizing a driving maneuver.

The system processes the route data and the scene data using a prediction neural network to generate a prediction output (step 206). Generally, the prediction output includes both (i) a set of one or more candidate planned trajectory outputs for the autonomous vehicle that each specify a respective planned trajectory for the autonomous vehicle starting from the current time point and (ii) for each target agent in a set of target agents, a respective set of one or more predicted future trajectory outputs that each specify a respective predicted future trajectory for the target agent starting from the current time point.

For example, each candidate planned trajectory output can include, for each of a plurality of future time steps, data defining a respective planned future state for the autonomous vehicle at the future time step. As described above, the "state" of a vehicle at a time step generally includes the position of the vehicle and can also optionally include other information, e.g., the heading of the vehicle, the velocity of the vehicle, and so on. The data defining a respective planned future state can include a regressed future state or can be the parameters of a distribution, e.g., a Gaussian distribution, over possible future states. For example, the parameters can include the mean of the distribution and, optionally, a covariance of the distribution.

Instead or in addition, each candidate planned trajectory output can include a likelihood score that represents an estimated likelihood that the respective candidate planned trajectory will be the most optimal trajectory for the autonomous vehicle given the intended route for the autonomous vehicle.

Similarly, for each target agent, the predicted future trajectory output can include, for each of the plurality of future time steps, data defining a respective predicted future state for the target agent at the future time step. The data defining the respective predicted future state can include a regressed future state or can be the parameters of a distribution, e.g., a Gaussian distribution, over possible future states. For example, the parameters can include the mean of the distribution and, optionally, a covariance of the distribution.

Instead or in addition, the predicted future trajectory output can include a likelihood score that represents a predicted likelihood that the respective predicted future trajectory will be an actual trajectory traversed by the target agent.

For example, the target agents can be all of the other agents in the scene or a proper subset of the agents in the scene. For example, the target agents can include a fixed number of agents that are closest to the autonomous vehicle or a fixed number of agents that have been selected by another system as the most important agents for planning the future trajectory of the autonomous vehicle.

Thus, the prediction neural network processes a single input to generate both candidate planned trajectories for the agent and predicted future trajectories for other agents in parallel.

Optionally, the prediction output can also generate one or more additional outputs that can be used in controlling the autonomous vehicle.

For example, within the prediction output, each candidate planned trajectory output can specify, at each future time step in the respective planned trajectory, a respective gear state for the autonomous vehicle at the future time step given that the autonomous vehicle is following the respective planned trajectory. Generally, the gear state of a vehicle at a given time step refers to which gear the transmission of the vehicle is engaged in at the given time step. Examples of gears include, first gear, second gear, drive, reverse, neutral, and so on.

As another example, within the prediction output, each candidate planned trajectory output can specify, at each future time step in the respective planned trajectory, a respective turn signal state for the autonomous vehicle at the future time step given that the autonomous vehicle is following the respective planned trajectory. Generally, the turn signal state for a vehicle at a given time step identifies, for each turn signal of the vehicle, whether the turn signal is active at the given time step.

As another example, the prediction output can also include, for each of one or more traffic signals in the scene, a respective predicted state of the traffic signal at each of one or more future time points after the current time point. The on-board system can then use this predicted state in controlling the vehicle. Examples of traffic signal states include whether the traffic signal is illuminated, whether the traffic signal is flashing, the color of the traffic signal, and so on.

The control system of the autonomous vehicle can then use one or more of these additional outputs if the candidate planned trajectory is selected to be used to control the trajectory, e.g., as part of determining the appropriate gear for the vehicle at any given time or as part of determining whether or not the turn signal should be activated at any given time. Alternatively, one or more of the additional outputs can be used to improve the training signal provided to the planner neural network during training, and then not generated or disregarded at inference time.

The system selects a final planned trajectory for the autonomous vehicle from the prediction output (step 208). For example, the system can perform this selection as described above.

The system controls the autonomous vehicle using the final planned trajectory (step 210). That is, the system can provide the final planned trajectory to a controller for the autonomous vehicle, which can translate the trajectory into control inputs for the control systems of the autonomous vehicle and then apply the control inputs to cause the autonomous vehicle to move in the environment.

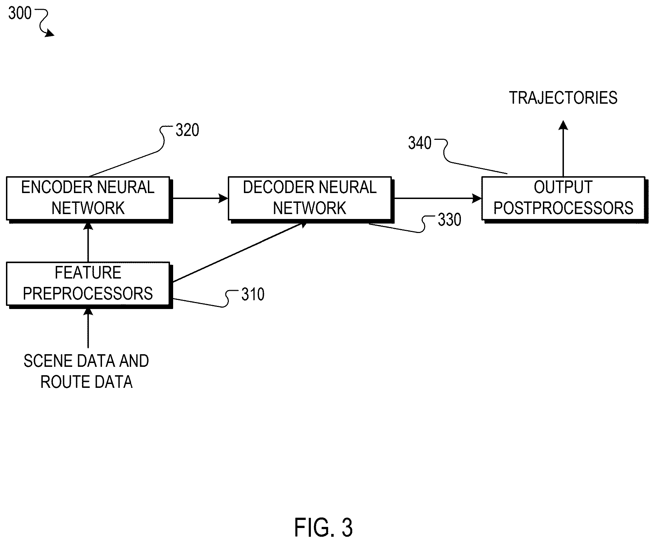

FIG. 3 shows an example 300 of the architecture of the prediction neural network. As shown in the example of FIG. 3, the prediction neural network includes an encoder neural network 320 and a decoder neural network 330.

The encoder neural network 320 processes the scene data to generate an encoded representation of the scene data. The encoded representation of the scene data generally includes a set of one or more vectors of numerical values that represent the scene data.

In the example of FIG. 3, the encoder neural network 320 receives as input preprocessed feature tensors for different modalities of tokens. The different modalities of tokens can include, e.g., agent states for the autonomous vehicle and the other agents in the environment, static road graph features, dynamic road graph features, and so on.

The encoder neural network 320 can have any appropriate architecture that allows the encoder neural network 320 to map the scene data to the encoded representation. For example, the encoder neural network 320 can include any of: convolutional layers, fully-connected layers, recurrent layers, Transformer layers, multi-context gating layers, and so on.

As one example, the encoder neural network 320 can include (i) a respective encoder for each of multiple different types of scene data and (ii) a combining neural network that maps the outputs of the respective encoders to the encoded representation. An example of such an architecture is described in more detail in AGENT TRAJECTORY PLANNING USING NEURAL NETWORKS, US Patent Application 17/396,554, filed on 8/6/2021, the contents of which are hereby incorporated herein in their entirety.

The decoder neural network 330 processes the encoded representation of the scene data and the route data to generate the prediction output.

Generally, the respective sets of predicted trajectory outputs are conditioned on the encoded representation of the scene data but not conditioned on the route data while the set of planned trajectory outputs are conditioned on the encoded representation of the scene data and on the route data.

More specifically, in the example of FIG. 3, the decoder neural network 330 is configured to maintain a respective query corresponding to each candidate planned trajectory output and each predicted trajectory output.

For example, the query corresponding to each trajectory can be a learned query. These queries are referred to as "learned" because they are learned during the training of the prediction neural network and are independent of the scene data and route data.

As another example, the query corresponding to a given trajectory can be determined based on the scene data, the intended route, or both. For example, the query corresponding to a given trajectory can represent the current state of the corresponding agent, the type of corresponding agent, i.e., whether the corresponding agent is the autonomous vehicle or a different, target agent, and so on.

As yet another example, the query corresponding to a given trajectory can be generated by combining a learned query with data generated from the scene data, the intended route, or both.

To process the encoded representation of the scene data and the route data to generate the prediction output, the decoder neural network 330 updates each of the queries and then generates the corresponding output from the updated query.

For example, the decoder neural network 330 can include a shared prediction head that is applied to each of the queries to generate the corresponding output. The shared prediction head can generally have any appropriate neural network architecture. For example, the prediction head can be a multi-layer perceptron (MLP) or can include a single linear neural network layer, optionally followed by a non-linear activation layer. In cases where the prediction neural network generates one or more of the additional outputs described above, because the prediction head is shared across all queries, the prediction head will generally also generate the additional output(s) for the queries corresponding to predicted trajectories, which the system can discard or otherwise disregard. Having a shared prediction head that is applied to both queries corresponding to planned trajectories and queries corresponding to predicted trajectories simplifies the architecture of the neural network and improves the computational efficiency of the neural network, i.e., because the neural network has fewer parameters than would be required to implement different prediction heads for different types of queries.

In particular, the decoder neural network 330 updates the queries corresponding to any given candidate planner trajectory conditioned on the queries corresponding to any other candidate planned trajectories, the queries corresponding to the predicted trajectories, the encoded representation of scene data, and the intended route. The decoder neural network 330 then generates the candidate planned trajectory from the updated query, e.g., by processing the updated query using the shared prediction head.

For each predicted future trajectory, the decoder neural network 330 updates the query corresponding to the predicted future trajectory conditioned on the queries corresponding to the predicted trajectories and the encoded representation of scene data but not on the intended route or on the queries corresponding to any other candidate planned trajectories. In so doing, the decoder neural network 330 prevents the predicted future trajectories from being generated conditioned on privileged information, i.e., on the future intended behavior of the autonomous vehicle, that would not be known to the corresponding target agent. The decoder neural network 330 then generates the predicted future trajectory from the updated query, e.g., by processing the updated query using the shared prediction head.

As a particular example, the decoder neural network 330 can include self-attention layers and cross-attention layers.

Each cross-attention layer updates each of the queries by performing cross-attention into the output of the encoder neural network. That is, each attention head of a given cross-attention layer applies an attention mechanism that generates queries from the queries and keys and values from the encoder output.

Each self-attention layer updates each of the queries by performing self-attention across the queries. That is, each attention head of a given self-attention layer applies an attention mechanism that generates queries, keys, and values from the queries.

To ensure that queries for trajectory predictions are not updated conditioned on the queries for the planned trajectories, the attention mechanism applied by the self-attention layers can be masked to mask away the autonomous vehicle queries, i.e., the queries corresponding to planned trajectories for the autonomous vehicle, from the agent queries, i.e., the queries corresponding to predicted future trajectories for other agents. In particular, autonomous vehicle queries can be permitted to attend to all of the queries, while agent queries can be restricted to attend to only agent queries and not to autonomous vehicle queries.

Generally, each attention head of each self-attention layer performs self-attention on the queries by generating a set of query vectors, a set of key vectors, and a set of value vectors from the queries received as input by the self-attention layer and then applying any of a variety of variants of query-key-value (QKV) attention, e.g., a dot product attention function or a scaled dot product attention function, using the query vectors, key vectors, and value vectors to generate an output.

As a particular example, in an attention head of a self-attention neural network layer, the attention mechanism may be configured to apply each of a query transformation, a key transformation, and a value transformation, to each query to derive a respective query vector, key vector , and value vector for each query which are used to determine the output. The query, key, and value transformations can be any respective linear transformations or any other appropriate learned transformation.

For example, the attention head can generate an updated embedding for each query by computing a weighted sum of the value vectors, weighted by a similarity function of the query vector for the query to the corresponding key vector. The similarity function may be, e.g., a dot product, cosine similarity, or other similarity measure.

To implement the masking, when computing the weights for each agent query, the attention head can mask out the autonomous vehicle queries by setting the weight corresponding to each autonomous vehicle query to zero in the weighted sum referred to above. For autonomous vehicle queries, the attention head can refrain from masking out any of the weights in the weighted sum.

As shown in FIG. 3, the system can also make use of feature preprocessors 310 that process the scene data and the route data to generate the inputs to the encoder neural network 320 and the decoder neural network 330.

For example, to condition the queries for the autonomous vehicle on the intended route, the feature preprocessors 310 can generate an embedding representing the intended route, e.g., by processing the intended route data using an embedding neural network that is trained jointly with the prediction neural network. The embedding representing the intended route can then be combined with, e.g., added to or averaged with, each query for the autonomous vehicle (but not with any queries for the other agents), prior processing by the first layer of the decoder neural network 330.

Similarly, the feature preprocessors 310 can also process the current states and agent types for each agent, i.e., for the autonomous vehicle and each target agent, to generate a respective embedding for each agent, e.g., by processing the current state and agent type using an embedding neural network that is trained jointly with the prediction neural network. The resulting embedding can then either be used as the query for the corresponding agent (i.e., before the embedding representing the autonomous vehicle is applied) or can be combined with, e.g., added to or averaged with, a learned embedding to generate the corresponding agent (i.e., before the embedding representing the autonomous vehicle is applied).

As another example, the feature preprocessors 310 can pre-process the scene data before the scene data is processed by the encoder neural network 320.

The prediction neural network can also include one or more output postprocessors 340 that post-process the outputs of the prediction head into the corresponding trajectories. For example, the output postprocessors 340 can transform the trajectories into a common coordinate system or can, when the respective trajectory outputs include parameters of a probability distribution, sample or select a trajectory from the distribution.

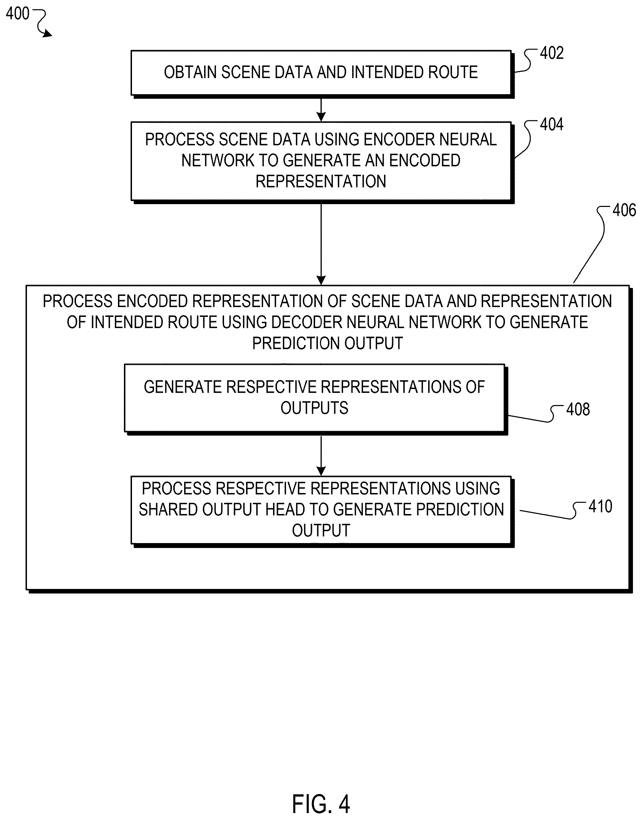

FIG. 4 is a flow diagram of an example process 400 for processing inputs using the shared prediction neural network. For convenience, the process 400 will be described as being performed by a system of one or more computers located in one or more locations. For example, a trajectory planning system, e.g., the trajectory planning system 200 of FIG. 1, appropriately programmed in accordance with this specification, can perform the process 400.

The system obtains scene data characterizing a scene in an environment and route data specifying an intended route for the autonomous vehicle (step 402).

The system processes the scene data using an encoder neural network of the shared prediction neural network to generate an encoded representation of the scene data (step 404).

The system processes (i) a representation of the route data and (ii) the encoded representation of the scene data using a decoder neural network of the shared prediction neural network to generate the prediction output (step 406). As described above, the prediction output includes both (i) a set of one or more candidate planned trajectory outputs for the autonomous vehicle that each specify a respective planned trajectory for the autonomous vehicle starting from the current time point and (ii) for each target agent in a set of target agents, a respective set of one or more predicted future trajectory outputs that each specify a respective predicted future trajectory for the target agent starting from the current time point.

As part of this processing, the decoder neural network processes the encoded representation and the representation of the route data to generate a respective representation for each candidate planned trajectory output and each predicted future trajectory output (step 408). For example, as described above, the system can maintain a respective query for each of the outputs and each respective representation can be an updated query generated by processing the respective queries through a sequence of neural network layers.

The system then processes the respective representation for each candidate planned trajectory output and each predicted future trajectory output using the shared output head to generate the candidate planned trajectory outputs and the predicted future trajectory outputs (step 410).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a standalone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and computeintensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method comprising:
obtaining, by an autonomous vehicle, scene data characterizing a scene in an environment at a current time point that comprises the autonomous vehicle and a set of target agents;
receiving, by the autonomous vehicle, route data characterizing an intended route through the environment for the autonomous vehicle after the current time point; and
processing, by the autonomous vehicle, the route data and the scene data using a prediction neural network to generate a prediction output that comprises (i) a set of one or more candidate planned trajectory outputs for the autonomous vehicle that each specify a respective planned trajectory for the autonomous vehicle starting from the current time point and (ii) for each target agent in the set of target agents, a respective set of one or more predicted future trajectory outputs that each specify a respective predicted future trajectory for the target agent starting from the current time point.

2. The method of claim 1, further comprising:
controlling the autonomous vehicle using the prediction output.

3. The method of claim 1 or claim 2, wherein the scene at the current time point comprises a plurality of other agents, and wherein the set of target agents is a subset of the plurality of other agents.

4. The method of claim 3, wherein the subset is a proper subset.

5. The method of any preceding claim, wherein each candidate planned trajectory output comprises, for each of a plurality of future time steps, data defining a respective planned future state for the autonomous vehicle at the future time step.

6. The method of any preceding claim, wherein each candidate planned trajectory output further comprises a likelihood score that represents an estimated likelihood that the respective candidate planned trajectory will be a most optimal trajectory for the autonomous vehicle given the intended route for the autonomous vehicle.

7. The method of any preceding claim, wherein, for each target agent, each predicted future trajectory output comprises, for each of a plurality of future time steps, data defining a respective predicted future state for the target agent at the future time step.

8. The method of any preceding claim, wherein each predicted future trajectory output further comprises a likelihood score that represents a predicted likelihood that the respective predicted future trajectory will be an actual trajectory traversed by the target agent.

9. The method of any preceding claim, wherein the prediction neural network comprises:
an encoder neural network that processes the scene data to generate an encoded representation of the scene data; and
a decoder neural network that processes the encoded representation of the scene data and the route data to generate the prediction output.

10. The method of claim 9, wherein:
the respective sets of predicted trajectory outputs are conditioned on the encoded representation of the scene data and not conditioned on the route data, and
the set of planned trajectory outputs are conditioned on the encoded representation of the scene data and on the route data,
and optionally wherein the decoder neural network is configured to maintain a respective query corresponding to each candidate planned trajectory output and each predicted trajectory output, and wherein processing the encoded representation of the scene data and the route data to generate the prediction output comprises:
for each candidate planned trajectory:
updating the query corresponding to the candidate planner trajectory conditioned on the queries corresponding to any other candidate planned trajectories, the queries corresponding to the predicted trajectories, the encoded representation of scene data, and the intended route; and
generating the candidate planned trajectory from the updated query,
and further optionally wherein processing the encoded representation of the scene data and the route data to generate the prediction output comprises:
for each predicted future trajectory:
updating the query corresponding to the predicted future trajectory conditioned on the queries corresponding to the predicted trajectories and the encoded representation of scene data but not on the intended route or on the queries corresponding to any other candidate planned trajectories; and
generating the predicted future trajectory from the updated query.

11. The method of any one of claims 9-10, wherein the decoder neural network that processes the encoded representation of the scene data and the route data to generate the prediction output comprises a shared prediction head that generates each candidate planned trajectory output and each predicted future trajectory output.

12. The method of any preceding claim, wherein each candidate planned trajectory output specifies, at each future time step in the respective planned trajectory:
a respective turn signal; and/or
a respective gear state state,
for the autonomous vehicle at the future time step given that the autonomous vehicle is following the respective planned trajectory.

13. The method of any preceding claim, wherein the prediction output further comprises, for each of one or more traffic signals in the scene, a respective predicted state of the traffic signal at each of one or more future time points after the current time point.

14. A system comprising one or more computers and one or more storage devices storing instructions that when executed by the one or more computers cause the one or more computers to perform the respective operations of any preceding claim.

15. Instructions, optionally stored on one or more computer-readable media, that when executed by one or more computers cause the one or more computers to perform the respective operations of any one of claims 1-13.
